(19) Europäisches Patentamt
European Patent Office
Office européen des brevets

(11) **EP 4 628 770 A1**

(12) **EUROPEAN PATENT APPLICATION**
published in accordance with Art. 153(4) EPC

(43) Date of publication:
**08.10.2025 Bulletin 2025/41**

(21) Application number: **24750117.4**

(22) Date of filing: **25.01.2024**

(51) International Patent Classification (IPC):
**F16L 11/06** (2006.01)   **C08K 3/04** (2006.01)
**C08L 9/02** (2006.01)

(52) Cooperative Patent Classification (CPC):
**C08K 3/04; C08L 9/02; F16L 11/06**

(86) International application number:
**PCT/JP2024/002180**

(87) International publication number:
**WO 2024/162168 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023 JP 2023013408**

(71) Applicant: **Sumitomo Riko Company Limited
Komaki-shi, Aichi 485-8550 (JP)**

(72) Inventors:
• **TAIRA Mayuka
  Komaki-shi, Aichi 485-8550 (JP)**
• **HIRADO Motoki
  Komaki-shi, Aichi 485-8550 (JP)**
• **HIRAI Ryo
  Komaki-shi, Aichi 485-8550 (JP)**

(74) Representative: **Becker, Eberhard
  Becker Kurig & Partner
  Patentanwälte mbB
  Bavariastraße 7
  80336 München (DE)**

(54) **FLUID HOSE**

(57)    Provided is a fluid hose having excellent ozone resistance and extraction resistance. This fluid hose is made of a nitrile-based rubber composition containing nitrile rubber (A) as a main component, wherein a modulus (M10) of the nitrile-based rubber composition is 0.1-0.5 MPa, and the nitrile-based rubber composition does not contain paraffin wax.

FIG. 1

EP 4 628 770 A1

**Description**

Technical Field

The present invention relates to a fluid hose, and more particularly to a fluid hose that excels in ozone resistance and extraction resistance.

Description of Related Art

Diene rubber, while relatively excelling in wear resistance, is inferior in weather resistance, especially ozone resistance, and under the existence of ozone, degradation progresses, and cracks, so-called ozone cracks, occur on the surface. The cracks progress due to static and dynamic stress relating to rubber articles, and as a result, the rubber articles reach destruction.

It is known to add wax to the diene rubber to impart ozone resistance.

For example, in Patent Literature 1, a rubber composition for a hose cover is disclosed that contains a diene polymer, a higher fatty acid ester having a melting point of 40°C or higher, microwax having 40 or more and 50 or less carbon atoms, and paraffin wax having 30 or more and less than 40 carbon atoms.

Related Art

Patent Literature

Patent Literature 1 Japanese Patent Application Laid-Open No. 11-199711

SUMMARY

Technical Problem

However, when the rubber composition for the hose cover disclosed in Patent Literature 1 is used as a hose for liquids and a specific solvent (for example, low molecular weight oil) is conveyed, the paraffin wax may be extracted (eluted) into the solvent.

On the other hand, when paraffin wax is removed to suppress the extraction of components, sufficient ozone resistance may no longer be possessed.

The present invention is made in view of such circumstances, and provides a fluid hose that excels in ozone resistance and extraction resistance.

Solution to the Problem

The present inventors, in order to solve the above-mentioned problems, as a result of repeated research, found that by selecting nitrile rubber as the diene rubber and setting the modulus to a specific range, a fluid hose that excels in ozone resistance and extraction resistance can be obtained.

That is, the present invention has the following [1] to [5] as the spirit thereof.

[1] A fluid hose is made of a nitrile rubber composition containing nitrile rubber (A) as a main component,

a modulus (M10) of the nitrile rubber composition is 0.1 to 0.5MPa, and
the nitrile rubber composition does not contain paraffin wax.

[2] The nitrile rubber (A) in the fluid hose according to [1] contains polyvinyl chloride.

[3] The nitrile rubber composition in the fluid hose according to [1] or [2] contains carbon black (B).

[4] A content of the carbon black (B) in the fluid hose according to [3] is 10 to 150 parts by mass with respect to 100 parts by mass of the nitrile rubber (A).

[5] An average particle size of the carbon black (B) in the fluid hose according to [3] or [4] is 15 to 75 nm.

Effects

According to the present invention, a fluid hose that excels in ozone resistance and extraction resistance can be provided.

BRIEF DESCRIPTION OF THE DRAWINGS

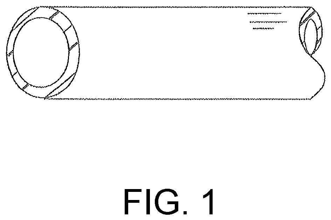

FIG. 1 is a diagram showing an example of a fluid hose according to the present invention.

DESCRIPTION OF EMBODIMENTS

Based on the following embodiment examples of the present invention, the present invention will be described in more detail, but the present invention is not limited to the embodiments.

The following describes each of components contained in a nitrile rubber composition that forms the fluid hose of the present invention.

[Nitrile rubber (A)]

As the nitrile rubber (A), for example, acrylonitrile butadiene rubber (NBR), hydrogenated acrylonitrile butadiene rubber (H-NBR), blend polymer of acrylonitrile butadiene rubber and a polyvinyl chloride (NBR-PVC), etc. can be mentioned, and can be used alone or in combination of two or more.

The acrylonitrile content (AN content) of the nitrile rubber (A) is normally 15 to 48 mass%, and preferably 15 to 35 mass%. That is, when the AN content of the nitrile rubber (A) is below the specific range, there is a tendency for oil resistance to be inferior, and conversely, when the AN content of the nitrile rubber (A) exceeds the specific range, there is a tendency for cold resistance and the like to decrease.

The nitrile rubber (A), from the viewpoint of ozone resistance, preferably contains PVC. That is, the nitrile rubber (A) preferably includes a blend polymer with PVC (NBR-PVC).

The content of PVC in the NBR-PVC is not particularly limited, but considering general ozone resistance, the content of PVC is preferably 15~45 mass% in the NBR-PVC. That is, if the content of PVC is less than 15 mass%, there tends to be inferior ozone resistance, and if the content of PVC exceeds 45 mass%, there tends to be problems in terms of processability and other aspects.

In the present invention, the rubber component may contain rubber other than the nitrile rubber (A), but it is preferable that 80 mass% or more of the rubber component of the nitrile rubber composition is the nitrile rubber (A), more preferably 90 mass% or more of the rubber component is the nitrile rubber (A), and even more preferably the rubber component consists merely of the nitrile rubber (A).

Also, the nitrile rubber (A) is the main component of the nitrile rubber composition. Here, the main component means a component that has a significant influence on the characteristics of the nitrile rubber composition, and the content of the component is usually 30 mass% or more of the nitrile rubber composition, preferably 40 mass% or more, more preferably 45 mass% or more.

The nitrile rubber composition preferably contains carbon black (B).

<Carbon black (B)>

The carbon black (B) is not particularly limited, and examples include furnace black (furnace carbon black) such as SAF, ISAF, HAF, MAF, FEF, SRF, GPF, APF, FF, CF, SCF and ECF; acetylene black (acetylene carbon black); thermal black (thermal carbon black) such as FT and MT; channel black (channel carbon black) such as EPC, MPC and CC; graphite, etc. can be mentioned. These may be used alone or two or more may be used in combination. Among them, furnace black is preferable, and SRF and GPF are more preferable. By using the furnace black, there is a tendency that the modulus described later can be made within a specific range.

The average particle size of the carbon black (B) is preferably 100nm or less, more preferably 90nm or less, and even more preferably 75nm or less. The lower limit is not particularly set, but is preferably 15nm or more. By setting the average particle size of the carbon black (B) within the aforementioned range, there is a tendency to be able to set the modulus, which will be described later, within a specific range, and there is a tendency to excel in ozone resistance. The average particle size of the carbon black (B) can be measured by using TEM, etc.

The dibutyl phthalate (DBP) absorption of the carbon black (B) is preferably 40 to 250 ml/100g, more preferably 50 to 200 ml/100g, and particularly preferably 50 to 160 ml/100g. By having the DBP absorption of the carbon black (B) within the specific range, there is a tendency to be able to maintain the modulus, which will be described later, within a specific range, and there is a tendency to excel in ozone resistance.

The DBP absorption can be measured for a non-compressed sample according to JIS K6217-4(2017).

The content of the carbon black (B) is, with respect to 100 parts by mass of the nitrile rubber (A), preferably 5 to 200 parts by mass, more preferably 20 to 150 parts by mass, even more preferably 30 to 130 parts by mass, and particularly preferably 35 to 110 parts by mass. When the content of the carbon black (B) is within the above range, there is a tendency that the effects of the present invention can be more suitably obtained.

The nitrile rubber composition may be kneaded with compounding agents commonly used in the rubber industry, such as plasticizers, vulcanizing agents, vulcanization accelerators, vulcanization aids, processing aids, antioxidants, fillers other than the carbon black (B), silane coupling agents, etc., to an extent that does not inhibit the effects of the present invention. These may be used alone or in combination of two or more.

[Plasticizer]

As the plasticizer, for example, a polyester plasticizer, phthalic acid plasticizer, adipic acid plasticizer etc. can be mentioned. These may be used alone or in combination of two or more. Among them, the adipic acid plasticizer is preferable.

As the adipic acid plasticizer, for example, a plasticizer having both ether bonds and ester bonds in one molecule, specifically, adipic acid bis[2-(2-butoxyethoxy)ethyl] and other adipic acid ether ester plasticizers can be mentioned. Also, as commercially available products of the ether ester plasticizer, for example, ADEKA CIZER RS-107, ADEKA CIZER RS-700, ADEKA CIZER RS-735, ADEKA CIZER RS-830, ADEKA CIZER RS-966, ADEKA CIZER RS-1000 (all manufactured by ADEKA); Thiokol TP-95, Thiokol TP-759 (all manufactured by HALLSTAR) and others can be mentioned.

In the case of using the plasticizer, the content thereof is normally 10 to 60 parts by mass, and preferably 20 to 40 parts by mass, with respect to 100 parts by mass of the nitrile rubber (A).

[Vulcanizing agent]

As the vulcanizing agent, for example, sulfur, a peroxide vulcanizing agent (peroxide vulcanizing agent), etc. can be used alone or in combination. Among these, sulfur is preferable in terms of storage stability and cost.

As the peroxide vulcanizing agent, for example, peroxyketals such as 1,1-bis(t-butylperoxy)-3,3,5-trimethylcyclohexane, 1,1-bis(t-hexylperoxy)-3,3,5-trimethylcyclohexane, 1,1-bis(t-hexylperoxy)cyclohexane, 1,1-bis(t-butylperoxy)cyclododecane, 1,1-bis(t-butylperoxy)cyclohexane, 2,2-bis(t-butylperoxy)octane, n-butyl-4,4-bis(t-butylperoxy)butane, n-butyl-4,4-bis(t-butylperoxy)valerate, etc.; dialkyl peroxides such as di-t-butyl peroxide, dicumyl peroxide, t-butylcumyl peroxide, $\alpha,\alpha'$-bis(t-butylperoxy-m-isopropyl)benzene, $\alpha,\alpha'$-bis(t-butylperoxy)diisopropylbenzene, 2,5-dimethyl-2,5-di(t-butylperoxy)hexane, 2,5-dimethyl-2,5-bis(t-butylperoxy)hexyne-3, etc.; diacyl peroxides such as acetyl peroxide, isobutyryl peroxide, octanoyl peroxide, decanoyl peroxide, lauroyl peroxide, 3,5,5-trimethylhexanoyl peroxide, benzoyl peroxide, 2,4-dichlorobenzoyl peroxide, m-trioyl peroxide, etc.; peroxy esters such as t-butyl peroxyacetate, t-butyl peroxyisobutyrate, t-butyl peroxy-2-ethylhexanoate, t-butyl peroxylaureate, t-butyl peroxybenzoate, di-t-butyl peroxyisophthalate, 2,5-dimethyl-2,5-di(benzoylperoxy)hexane, t-butyl peroxymaleic acid, t-butyl peroxyisopropyl carbonate, cumyl peroxyoctanoate, etc.; and hydroperoxides such as t-butyl hydroperoxide, cumene hydroperoxide, diisopropylbenzene hydroperoxide, 2,5-dimethylhexane-2,5-dihydroperoxide, 1,1,3,3-tetramethylbutyl peroxide, etc. can be mentioned. These may be used alone or in combination of two or more. Among these, 2,5-dimethyl-2,5-di(t-butylperoxy)hexane is preferably used because it does not have an odor problem.

When sulfur is used as the vulcanizing agent, the content thereof is preferably in the range of 0.1 to 15 parts by mass with respect to 100 parts by mass of the nitrile rubber (A), and particularly preferably in the range of 0.3 to 3 parts by mass.

Also, when using a peroxide vulcanizing agent as the vulcanization agent, the content thereof is preferably in the range of 1.5 to 20 parts by mass with respect to 100 parts by mass of the nitrile rubber (A), and particularly preferably in the range of 5 to 10 parts by mass. If the content of the vulcanization agent is too small, vulcanization becomes insufficient, and there is a tendency for the hose to be inferior in strength. If the content of the vulcanization agent is too large, the hose becomes too hard, and there is a tendency for the hose to be inferior in flexibility, in addition, the scorch time becomes shorter, and there is a tendency for processability to deteriorate.

[Vulcanization accelerator]

As the vulcanization accelerator, for example, thiazole-based, sulfenamide-based, thiuram-based, aldehyde-ammonia-based, aldehyde-amine-based, guanidine-based, thiourea-based, etc. vulcanization accelerators can be mentioned. These may be used alone or in combination of two or more. Among these, sulfenamide-based vulcanization accelerators and thiuram-based vulcanization accelerators are preferable in terms of excellent vulcanization reactivity.

Examples of the thiazole-based vulcanization accelerator include dibenzothiazyl disulfide (DM), 2-mercaptobenzothiazole (M), 2-mercaptobenzothiazole sodium salt (NaMBT), 2-mercaptobenzothiazole zinc salt (ZnMBT), etc. These may be used alone or in combination of two or more. Among these, dibenzothiazyl disulfide (DM) and 2-mercaptobenzothiazole (M) are preferable in terms of excellent vulcanization reactivity.

As the sulfenamide-based vulcanization accelerator, for example, N-oxydiethylene-2-benzothiazolylsulfenamide (NOBS), N-cyclohexyl-2-benzothiazolylsulfenamide (CM), N-t-butyl-2-benzothiazoylsulfenamide (BBS), N,N'-dicyclohexyl-2-benzothiazoylsulfenamide, etc. can be mentioned. These may be used alone or in combination of two or more.

As the thiuram-based vulcanization accelerator, for example, tetramethylthiuram disulfide (TT), tetraethylthiuram disulfide (TET), tetrabutylthiuram disulfide (TBTD), tetrakis(2-ethylhexyl)thiuram disulfide (TOT), tetrabenzylthiuram disulfide (TBZTD), etc. can be mentioned. These may be used alone or in combination of two or more.

In the case of using the vulcanization accelerator, the content thereof is normally 0.1 to 10 parts by mass, and preferably 0.5 to 6 parts by mass, with respect to 100 parts by mass of the nitrile rubber (A).

[Vulcanization aid]

As the vulcanization aid, for example, triallyl isocyanurate, N,N'-m-phenylenebismaleimide, methacrylic acid, methyl methacrylate, ethyl methacrylate, propyl methacrylate, isopropyl methacrylate, n-butyl methacrylate, i-butyl methacrylate, sec-butyl methacrylate, t-butyl methacrylate, 2-ethylhexyl methacrylate, cyclohexyl methacrylate, isodecyl methacrylate, lauryl methacrylate, tridecyl methacrylate, stearyl methacrylate, 2-hydroxyethyl methacrylate, hydroxypropyl methacrylate, polyethylene glycol monomethacrylate, polypropylene glycol monomethacrylate, 2-ethoxyethyl methacrylate, tetrahydrofurfuryl methacrylate, allyl methacrylate, glycidyl methacrylate, benzyl methacrylate, dimethylaminoethyl methacrylate, diethylaminoethyl methacrylate, methacryloxy ethyl phosphate, 1,4-butanediol diacrylate, ethylene glycol dimethacrylate, 1,3-butylene glycol dimethacrylate, neopentyl glycol dimethacrylate, 1,6-hexanediol dimethacrylate, diethylene glycol dimethacrylate, triethylene glycol dimethacrylate, polyethylene glycol dimethacrylate, dipropylene glycol dimethacrylate, polypropylene glycol dimethacrylate, trimethylolethane trimethacrylate, trimethylolpropane trimethacrylate, allyl glycidyl ether, N-methylolmethacrylamide, 2,2-bis(4-methacryloxypolyethoxyphenyl)propane, aluminum methacrylate, zinc methacrylate, calcium methacrylate, magnesium methacrylate, 3-chloro-2-hydroxypropyl methacrylate, zinc oxide type 1, zinc oxide type 2, zinc oxide type 3, fine zinc oxide and other zinc oxides, and magnesium oxide can be mentioned. The vulcanization aid may be used alone or in combination of two or more kinds.

In the case of using the vulcanization aid, the content thereof is, with respect to 100 parts by mass of the nitrile rubber (A), normally 0.05 to 15 parts by mass, preferably 0.1 to 10 parts by mass, more preferably 1 to 8 parts by mass.

[Processing aid]

As the processing aid, for example, fatty acids such as oleic acid, palmitic acid, stearic acid; fatty acid metal salts such as zinc laurate, zinc stearate, barium stearate, calcium stearate; fatty acid esters; and glycols such as ethylene glycol, polyethylene glycol can be mentioned. The processing aid can be used alone or in combination of two or more kinds. Among them, fatty acids are preferable, and stearic acid is more preferable.

In the case of using the processing aid, the content thereof is normally 0.2 to 10 parts by mass, and preferably 0.3 to 5 parts by mass, with respect to 100 parts by mass of the nitrile rubber (A).

[Antioxidant]

As the antioxidant, amine-ketone antioxidants, imidazole antioxidants, amine antioxidants, phenol antioxidants, sulfur antioxidants, phosphorus antioxidants, etc. can be mentioned. The antioxidant can be used alone or in combination of two or more kinds.

In the case of using the antioxidant, the content thereof is normally 1 to 10 parts by mass, and preferably 2 to 8 parts by mass, with respect to 100 parts by mass of the nitrile rubber (A).

[Wax]

As the wax, it is one that excludes paraffin wax.

Generally, to impart ozone resistance to nitrile rubber, paraffin wax is added. However, a rubber hose for fluid using paraffin wax tend to have paraffin wax that easily dissolves out when the fluid is low molecular weight oil or the like. Therefore, the nitrile rubber composition used in the present invention does not contain paraffin wax.

As the wax, for example, petroleum-based waxes such as microcrystalline wax; natural waxes such as vegetable waxes, animal waxes; synthetic waxes such as polymers of ethylene, propylene, etc. can be mentioned. The waxes can be used alone or in combination of two or more kinds, but in the present invention, from the viewpoint of extraction resistance, it is preferable that the nitrile rubber composition does not contain wax.

[Fillers other than carbon black (B)]

As fillers other than the carbon black (B), inorganic fillers such as silica, calcium carbonate, basic magnesium carbonate, clay, litharge, diatomaceous earth; organic fillers such as reclaimed rubber, powdered rubber can be mentioned. The fillers may be used alone or in combination of two or more.

In the case of using a filler other than the carbon black (B), the content thereof is normally 5 to 200 parts by mass, preferably 20 to 100 parts by mass, with respect to 100 parts by mass of the nitrile rubber (A).

<Manufacturing method>

The nitrile rubber composition can be prepared, for example, by compounding the nitrile rubber (A) together with, as needed, the carbon black (B), plasticizer, vulcanizing agent, vulcanization accelerator, vulcanization aid, processing aid, antioxidant, etc. mentioned above, and kneading these using a kneading machine such as a kneader, Banbury mixer, roll, etc.

The nitrile rubber composition, when formed into a vulcanized rubber sheet with a thickness of 2mm, has a modulus (M10) of 0.1 to 0.5MPa, which is a low modulus that is important from the viewpoint of ozone resistance, and preferably 0.2 to 0.49MPa. By having the modulus (M10) within the aforementioned range, excellent ozone resistance may be obtained. Also, if the modulus (M10) is lower than the aforementioned range, the sealing property of the fastening part of the joint portion decreases.

In the present invention, by setting the modulus (M10) to a low specific range, the force (stress) that the rubber material receives from the outside when displacement is applied may be suppressed, and therefore it is presumed to excel in ozone resistance.

The aforementioned modulus (M10) can be measured as follows.

A nitrile rubber composition is press molded by a press vulcanizer to prepare a vulcanized rubber sheet with a thickness of 2mm.

Next, using the aforementioned vulcanized rubber sheet as a sample, a tensile test is performed according to JIS K6251-2017 (vulcanized rubber and thermoplastic rubber - method for seeking tensile properties), and the median value of stress (MPa) at 10% elongation is read, which is designated as the modulus (M10).

In order to make the modulus of the nitrile rubber composition within the aforementioned range, for example, methods such as using carbon black with an average particle size in a specific range, using carbon black having the DBP absorption in a specific range, or making the content of carbon black within a specific range can be mentioned. There tends to be a tendency that the modulus of the nitrile rubber composition can be made within the aforementioned range by using the methods alone or in combination of two or more. Among them, the method of using carbon black with an average particle size in a specific range is preferable.

Carbon black with an average particle size in a specific range excels in rubber reinforcement, so modulus (M10) stress may be designed with a smaller content of carbon black.

Also, the fluid hose of the present invention can be manufactured, for example, in the following manner. Specifically, the nitrile rubber composition is prepared, and after extruding the prepared nitrile rubber composition into a cylindrical shape using a single-axis extruder, by heating under predetermined conditions to vulcanize (crosslink), a fuel hose with a single layer structure as shown in FIG. 1, for example, can be manufactured. In the extrusion molding, a mandrel may be used, if needed.

The fluid hose of the present invention is not limited to the aforementioned single-layer structure, and if needed, a resin layer, a reinforcing fiber layer, a layer made of other rubber compositions, etc. may be formed on the outer circumference of the single-layer structure hose. Also, in the case of making a fluid hose consisting of such multiple layers, it is preferable to use a layer made of a crosslinked body of the nitrile rubber composition of the present invention as a layer (innermost layer) in contact with the fluid, but it is not limited thereto, and may be an intermediate layer or an outermost layer.

The fluid hose obtained in this manner according to the present invention preferably has a hose inner diameter in the range of 2 to 100 mm, and more preferably in the range of 5 to 50 mm. Also, the hose wall thickness is preferably in the range of 0.5 to 20 mm, and more preferably in the range of 1 to 10 mm.

The fluid hose of the present invention can be suitably used for, for example, transportation machinery etc. such as automobiles, airplanes, railways, forklifts, shovel cars, cranes, etc. Among these, the fluid hose of the present invention can be suitably used as a hose for transporting fluid used in automobiles. Specifically, the fluid hose of the present invention can be used for, for example, fuel hoses, oil hoses, radiator hoses, heater hoses, air conditioner hoses, etc., and cooling hoses for battery packs of electric vehicles or fuel cell vehicles, etc.

EP 4 628 770 A1

Example

The following specifically describes the present invention through examples. However, the present invention is not limited in any way by the following examples.

First, prior to the examples and comparative examples, the materials shown below were prepared.

[Nitrile rubber (A)]

· Krynac 3370 (manufactured by ARLANXEO, NBR, AN content: 33 mass%)
· Nipol 1203W (manufactured by Nippon Zeon, NBR-PVC, AN content: 32 mass%, PVC content: 29 mass%)

[Carbon black (B)]

· SEAST V (manufactured by Tokai Carbon, DBP absorption: 87ml/100g, average particle size: 62nm)
· VULCUN 6J (manufactured by Cabot Japan, DBP absorption: 115ml/100g, average particle size: 22nm)
· SPHERON 5200 (manufactured by Cabot Japan, DBP absorption: 125ml/100g, average particle size: 62nm)
· SEAST S (manufactured by Tokai Carbon, DBP absorption: 68ml/100g, average particle size: 66nm)
· SEAST G-116HM (manufactured by Tokai Carbon, DBP absorption: 158ml/100g, average particle size: 38nm)

[Plasticizer]

· ADEKA CIZER RS-107 (manufactured by ADEKA, ether ester plasticizer)

[Vulcanizing agent]

· Sulfur (manufactured by Tsurumi Chemical Industry)

[Vulcanization accelerator]

· SANSELLER CM-G (manufactured by Sanshin Chemical Industry)
· SANSELLER TET-G (manufactured by Sanshin Chemical Industry)

[Vulcanization aid]

· Zinc oxide (manufactured by Mitsui Mining and Smelting Co., Ltd.)

[Processing aid]

· Stearic acid (manufactured by Kao Corporation)

[Antioxidant]

7

· NOCRACK B (manufactured by Ouchi Shinko Chemical Industrial Co., Ltd.)
· ANTAGE NBC (manufactured by Kawaguchi Chemical Industry)

[Wax]

· SANTITE R (manufactured by Seiko Chemical)

[Examples 1-6, Comparative Examples 1-3]

Each of the components other than the vulcanizing agent and vulcanization accelerator was compounded in the proportion shown in Table 1 below, and kneaded using a Banbury mixer. Next, the vulcanizing agent and vulcanization accelerator were compounded in the proportion shown in Table 1 below, and mixed using a roll, thereby preparing a nitrile rubber composition.

Also, each of the obtained nitrile rubber compositions was press molded by a press vulcanizer to prepare a vulcanized rubber sheet with a thickness of 2 mm. Using the vulcanized rubber sheet, evaluations of various properties were performed according to the following criteria. The results are shown together in Table 1 below.

<Modulus (M10)>

Using the aforementioned vulcanized rubber sheet, a tensile test was performed according to JIS K6251-2017 (vulcanized rubber and thermoplastic rubber - method for seeking tensile properties), and the median value of stress (MPa) at 10% elongation was read, and used as the modulus (M10).

<Ozone resistance>

Using the vulcanized rubber sheet, a static ozone degradation test was performed according to JIS K6259-1 (vulcanized rubber and thermoplastic rubber - determination of ozone resistance - part 1: static and dynamic ozone degradation test) under conditions of test temperature 40°C, ozone concentration 50ppm, and tensile strain 10%, and the presence or absence of cracks in the vulcanized rubber sheet was visually confirmed and evaluated according to the following evaluation criteria.

[Evaluation criteria]

excellent: no cracks occurred until after 168 hours
very good: no cracks occurred until after 48 hours
good: no cracks occurred until after 24 hours
poor: cracks occurred within 24 hours

<Extraction resistance>

The vulcanized rubber sheet was cut into 7 mm square rubber pieces, and 6 g of each piece was sampled and placed in a test container, to which 25 mL of test oil (isooctane) was added, and the test container was kept at a test temperature of 80°C for 70 hours, and then allowed to stand at room temperature (25° C) for 24 hours. After standing, the rubber pieces were removed from the test oil (isooctane), 10 mL of the test liquid was transferred to a centrifuge tube, which was then allowed to stand in a cooling bath at -15°C for 5 hours, followed by centrifugation at 1900 rpm for 30 minutes. Subsequently, the volume (mL) of the precipitate at the bottom of the test tube was read, the amount of precipitate was calculated from the formula below, and evaluated according to the evaluation criteria below.

$$\text{Amount of precipitate (volume \%)} = \text{Volume of precipitate (mL)} / \text{Test liquid (10 mL)} \times 100$$

[Evaluation criteria]

very good: amount of precipitate is 1 volume% or less
good: amount of precipitate exceeds 1 volume% and is less than 2 volume%
poor: amount of precipitate is 2 volume% or more

[Table 1]

| | | | | | | | | | | | (Part by mass) |
|---|---|---|---|---|---|---|---|---|---|---|---|
| Component | Material Name | Example 1 | Example 2 | Example 3 | Example 4 | Example 5 | Example 6 | Comparative Example 1 | Comparative Example 2 | Comparative Example 3 |
| Nitrile rubber (A) | Krynac 3370 | 100 | 100 | 100 | 100 | - | 100 | 100 | 100 | 100 |
| | Nipol 1203W | - | - | - | - | 100 | - | - | - | - |
| Carbon black (B) | SEAST V | 80 | - | - | - | 80 | - | - | - | - |
| | VULCUN 6J | - | 70 | - | - | - | - | - | - | - |
| | SPHERON 5200 | - | - | 80 | 60 | - | - | 100 | 80 | - |
| | SEAST S | - | - | - | - | - | 80 | - | - | - |
| | SEAST G-116HM | - | - | - | - | - | - | - | - | 100 |
| Plasticizer | ADEKA CIZER RS-107 | 30 | 30 | 30 | 30 | 30 | 30 | 30 | 30 | 30 |
| Vulcanizing agent | Sulfur | 0.4 | 0.4 | 0.4 | 0.4 | 0.4 | 0.4 | 0.4 | 0.4 | 0.4 |
| Vulcanization accelerator | SANSELLER CM-G | 1.2 | 1.2 | 1.2 | 1.2 | 1.2 | 1.2 | 1.2 | 1.2 | 1.2 |
| | SANSELLER TET-G | 2 | 2 | 2 | 2 | 2 | 2 | 2 | 2 | 2 |
| Vulcanization aid | Zinc oxide | 5 | 5 | 5 | 5 | 5 | 5 | 5 | 5 | 5 |
| Processing aid | Stearic acid | 1 | 1 | 1 | 1 | 1 | 1 | 1 | 1 | 1 |
| Antioxidant | NOCRACK B | 1 | 1 | 1 | 1 | 1 | 1 | 1 | 1 | 1 |
| | ANTAGE NBC | 2 | 2 | 2 | 2 | 2 | 2 | 2 | 2 | 2 |
| Wax | SANTITE R | - | - | - | - | - | - | - | 3 | - |
| Contain paraffin wax | | No | No | No | No | No | No | No | Yes | No |
| Modulus (M10) [MPa] | | 0.37 | 0.42 | 0.43 | 0.3 | 0.48 | 0.28 | 0.58 | 0.44 | 0.65 |
| Ozone resistance | | good | good | good | very good | excellent | very good | poor | excellent | poor |
| Extraction resistance | | very good | very good | very good | very good | very good | very good | very good | poor | very good |

From the results of the aforementioned Table 1, the respective nitrile rubber compositions of Examples 1-6 excelled in ozone resistance and extraction resistance.

In contrast, the respective nitrile rubber compositions of Comparative Examples 1 and 3, which exceeded 0.5 MPa in modulus, resulted in inferior ozone resistance, and could not achieve both ozone resistance and extraction resistance.

Also, in Comparative Example 2, due to the use of paraffin wax, the result was inferior in extraction resistance, and both ozone resistance and extraction resistance could not be achieved.

From the above, when a fluid hose is manufactured by a known method from the respective nitrile rubber compositions of Examples 1-6, the obtained fluid hose excels in ozone resistance and extraction resistance.

In addition, in the above examples, specific aspects of the present invention are shown, but the above examples are merely illustrative and should not be construed as limiting. Various modifications that are apparent to those skilled in the art are all intended to be within the scope of the present invention.

Industrial Applicability

The fluid hose made of the nitrile rubber composition of the present invention excels in ozone resistance and extraction resistance, and therefore can be suitably used for, for example, transportation machinery etc. such as automobiles, airplanes, railways, forklifts, shovel cars, cranes, etc.

**Claims**

1. A fluid hose made of a nitrile rubber composition containing nitrile rubber (A) as a main component,

    a modulus (M10) of the nitrile rubber composition being 0.1 to 0.5MPa, and
    the nitrile rubber composition not containing paraffin wax.

2. The fluid hose according to claim 1, wherein the nitrile rubber (A) contains polyvinyl chloride.

3. The fluid hose according to claim 1 or 2, wherein the nitrile rubber composition contains carbon black (B).

4. The fluid hose according to claim 3, wherein a content of the carbon black (B) is 10 to 150 parts by mass with respect to 100 parts by mass of the nitrile rubber (A).

5. The fluid hose according to claim 3 or 4, wherein an average particle size of the carbon black (B) is 15 to 75nm.

FIG. 1

## INTERNATIONAL SEARCH REPORT

| International application No. |
|---|
| **PCT/JP2024/002180** |

**A. CLASSIFICATION OF SUBJECT MATTER**

*F16L 11/06*(2006.01)i; *C08K 3/04*(2006.01)i; *C08L 9/02*(2006.01)i
FI: F16L11/06; C08L9/02; C08K3/04

According to International Patent Classification (IPC) or to both national classification and IPC

**B. FIELDS SEARCHED**

Minimum documentation searched (classification system followed by classification symbols)

F16L11/06; C08K3/04; C08L9/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-517679 A (LG CHEM, LTD.) 09 March 2022 (2022-03-09) entire text, all drawings | 1-5 |
| A | JP 2019-183060 A (TAOKA CHEM CO., LTD.) 24 October 2019 (2019-10-24) entire text, all drawings | 1-5 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/002180**

| Patent document cited in search report | | | Publication date (day/month/year) | Patent family member(s) | | | Publication date (day/month/year) |
|---|---|---|---|---|---|---|---|
| JP | 2022-517679 | A | 09 March 2022 | US | 2022/0064416 | A1 | |
| | | | | entire text, all drawings | | | |
| | | | | WO | 2021/085829 | A1 | |
| | | | | EP | 3889194 | A1 | |
| | | | | KR | 10-2021-0052197 | A | |
| | | | | CN | 113260638 | A | |
| JP | 2019-183060 | A | 24 October 2019 | (Family: none) | | | |

Form PCT/ISA/210 (patent family annex) (July 2022)

**EP 4 628 770 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11199711 A